(19) Europäisches Patentamt
European Patent Office
Office européen des brevets

(11) **EP 1 392 002 B1**

(12) **EUROPEAN PATENT SPECIFICATION**

(45) Date of publication and mention
of the grant of the patent:
**07.11.2007 Bulletin 2007/45**

(51) Int Cl.:
*H04B 3/54* *(2006.01)*

(21) Application number: **03016577.3**

(22) Date of filing: **25.07.2003**

(54) **Power line communication system**

Netzleitungsübertragungssystem

Système de communication sur ligne de courant

(84) Designated Contracting States:
**DE FR GB**

(30) Priority: **23.08.2002 JP 2002243578**

(43) Date of publication of application:
**25.02.2004 Bulletin 2004/09**

(73) Proprietor: **FUJITSU LIMITED**
**Kawasaki-shi,**
**Kanagawa 211-8588 (JP)**

(72) Inventors:
• **Tojo, Toshiro,**
**Fujitsu Limited**
**Kawasaki-shi,**
**Kanagawa 211-8588 (JP)**

• **Kaku, Takashi,**
**Fujitsu Limited**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(56) References cited:
**EP-A- 0 496 717**          **WO-A-94/03002**

EP 1 392 002 B1

**Description**

BACKGROUND OF THE INVENTION

1. Field of the Invention

The present invention relates generally to a data transmission apparatus and a data transmission method, and particularly to a data transmission apparatus or a data transmission method implemented in a power line carrier (PLC) communication modem and the like for realizing high speed data communication using a power line, wherein the transmitted data can be received with high accuracy even when the input signal has a wide dynamic range.

2. Description of the Related Art

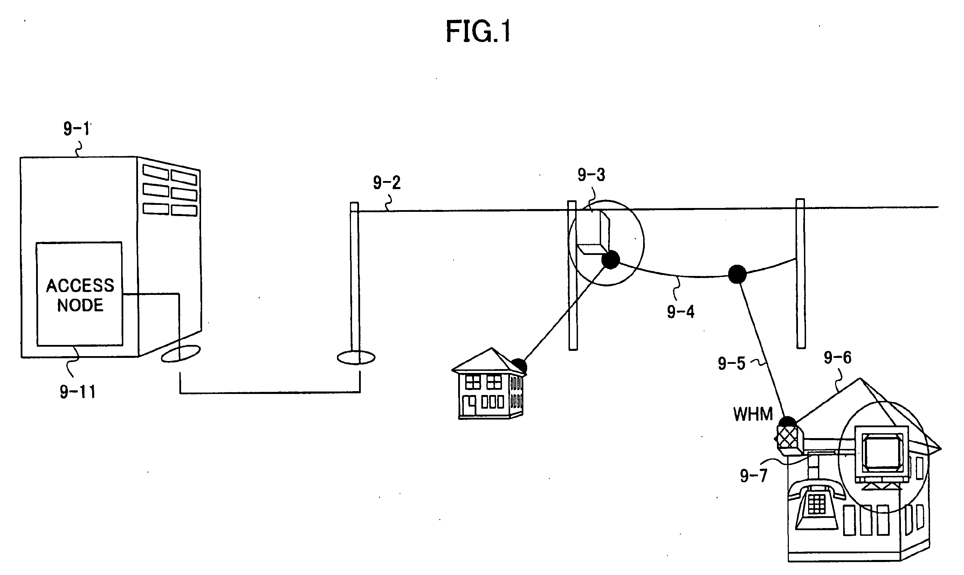

FIG.1 shows an exemplary configuration of a PLC communication system. In this drawing, the power line consists of a 6.6 kV high voltage power distribution line 9-2 arranged between a power distribution substation 9-1 and a pole transformer 9-3, a 100V/200V low voltage power distribution line 9-4 arranged between the pole transformer 9-3 and a house 9-6, and an incoming line 9-5.

In this PLC communication system, optical fibers are provided between the access node 9-11 of the power distribution substation 9-1 and the modem provided in the pole transformer 9-3, along with the above high voltage power distribution line 9-2, so that data transmission by optical signals is made possible within this region. Also, data transmission is possible in between the pole transformer 9-3 and a modem plugged into an outlet in the house 9-6 via the 100V/200V low voltage distribution line 9-4, the incoming line 9-5, and interior wiring 9-7.

However, many home appliances are connected to the above low voltage distribution line 9-4, the incoming line 9-5, and the interior wiring 9-7, and the power switches and inverter circuits of the above home appliances emit random noise, which can potentially degrade the communication quality of the above-described data transmission. Thus, technologies for countering the above problem are being developed in order to enable better data transmission in a PLC communication system. For example, data transmission may be performed using communication techniques that are known to be resistant to noise such as the FM modulation technique, the FSK modulation technique, the PSK modulation technique, or the spread spectrum technique. Also, communication may be established by introducing the multi-carrier modulation technique, the OFDM (Orthogonal Frequency Division Multiplexing) technique, or the like so that carrier bands with high noise levels can be avoided.

On the other hand, in this PLC communication system, the electromagnetic fields due to radiation leakage from the power lines that carry the signals may influence other communications and broadcast media. In particular, the power lines of the PLC communication system may generate noise that debilitates receivers of shortwave broadcasts in receiving clear shortwave broadcasts.

As a measure for reducing the influence of noise and the like on other communications due to the radiation-leakage electromagnetic fields, a technology for reducing the transmission level in the power line carriage has been contemplated. However, when the transmission level is reduced in the power line carriage communication, the communication quality is significantly degraded in the power line carriage due to noise and the like emitted from the power switches and inverter circuits of home appliances as described above.

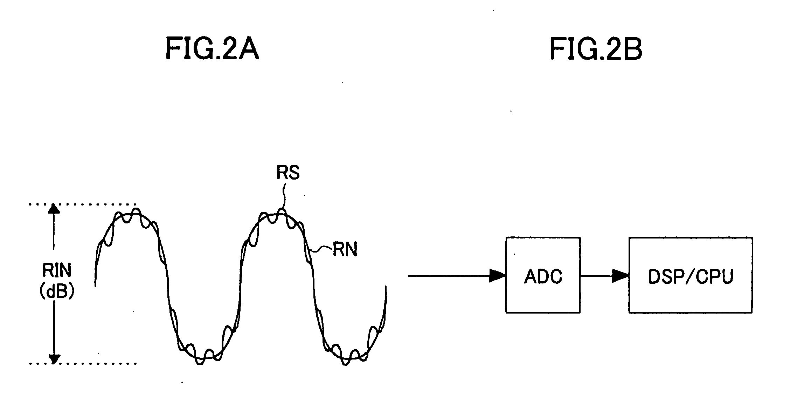

FIG.2A shows an exemplary state of a signal received at the modem implemented in the pole transformer 9-3 via the low voltage power distribution line 9-4 in the PLC communication system of FIG.1. The received signal is a superimposition of the data transmission signal RS with a small amplitude on a noise level RN with a large amplitude.

To properly extract transmission data from the above-described received signal, the composite signal of the noise level RN and the received signal RS must be input to an A/D converter (ADC) over the entire range of amplitude RIN. Then, the digitalized signal is processed by a digital signal processor (DSP), as shown in FIG.2B.

However, the amplitude RIN of the composite signal is large and thus, no A/D converter currently manufactured is capable of handling such a large dynamic range (over 130dB). Thus, it is quite difficult to realize a circuit that is capable of directly taking in the signal received via the power line.

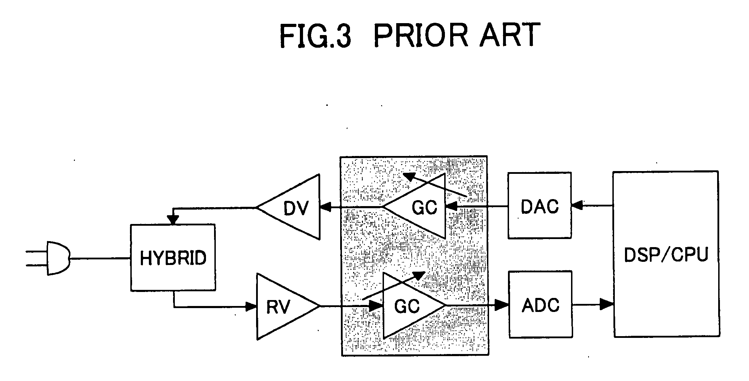

FIG.3 illustrates one technique to solve the above-described problem concerning the dynamic range of the input signal. Herein, a gain controller (GC) is provided before the A/D converter (ADC) and the amplitude of the input signal is attenuated by the gain controller (GC) so as to conform to the dynamic range of the A/D converter (ADC). According to this configuration, a receiving circuit can be realized using a general-purpose A/D converter (ADC).

However, if the gain controller (GC) is used to attenuate the amplitude of the input signal, the amplitude of the data transmission signal RS containing the transmission data is also attenuated. Thus, the precision of transmission data detection is degraded, thereby causing the degradation of reception characteristics.

As an alternative proposal for solving the above problem concerning the dynamic range when using the general-purpose A/D converter (ADC), the use of an A/D converter of the over sampling type is contemplated. However, in a simple over sampling method, it is still difficult to realize satisfactory performance in reception signal detection.

In EP-A-0 496 717 there is disclosed a method and device for transmitting data within a predetermined frequency range over a noisy medium, wherein a spread spectrum data independent signal formed by a pseudo noise code is mixed with the data to be transmitted for forming a spread spectrum data signal, which data signal is modulated and at least 50% of the power of the modulated data signal is transmitted within said frequency range. The chip of the data signal to be transmitted is substituted by a wave shaped signal having a raised cosine spectrum, which wave shaped signal is thereafter truncated by means of a truncation window whereby the spectrum broadening is kept limited within said frequency range in order to obtain a further wave shaped signal which is, considered in the time domain, limited within the time of a predetermined period.

## SUMMARY OF THE INVENTION

The present invention has been developed in response to the above-described problems of the related art and its object is to provide a data reception method that enables precise data regeneration from an input signal that has a large noise amplitude using an A/D converter that has a relatively narrow dynamic range.

According to one aspect of the present invention there is provided a data transmission apparatus comprising a transmission side and a reception side, characterized in that the reception side includes: a spread spectrum processing part that performs a spread spectrum process on an input signal; an analog-to-digital conversion part that performs an analog-to-digital conversion process on a signal that has undergone said spread spectrum process; and an inverse spread spectrum processing part that performs an inverse spread spectrum process of said spread spectrum process on a signal that has undergone said analog-to-digital conversion process.

According to another aspect of the present invention there is provided a data transmission method, for performing data transmission in a data transmission apparatus comprising a transmission side and a reception side, comprising, on the reception side: a spread spectrum processing step of performing a spread spectrum process on an input signal; an analog-to-digital conversion step of performing an analog-to-digital conversion process on a signal that has undergone said spread spectrum process; and an inverse spread spectrum processing step of performing an inverse spread spectrum process of said spread spectrum process on a signal that has undergone said analog-to-digital conversion process.

Thus, in the present invention, a spread spectrum process is performed through multiplication of an input signal by a PN sequence, and the signal obtained from the spread spectrum process is digitally converted by an analog-to-digital conversion process. Further, an inverse spread spectrum process of the above spread spectrum process is performed through multiplication of the digitally converted signal by the same PN sequence.

By incorporating the spread spectrum process into the analog-to-digital conversion process, the precision of the analog-to-digital conversion process can be substantially improved. Thereby, transmission data contained in the input signal can be regenerated with precision as a digital signal using a general-purpose A/D converter that has a relatively narrow dynamic range.

## BRIEF DESCRIPTION OF THE DRAWINGS

FIG.1 is a diagram for illustrating a configuration of a power line carrier communication system in which an embodiment of the present invention can be implemented;

FIGS.2A and 2B illustrate the object of the power line carrier communication system of FIG.1;

FIG.3 is a block diagram for illustrating a modem configuration as an exemplary data transmission apparatus of the conventional art that can be used in the power line carrier communication system of FIG.1;

FIG.4 is a block diagram for illustrating a circuit configuration of a modem as a data transmission apparatus according to an embodiment of the present invention;

FIG.5 is a circuit block diagram for illustrating an internal configuration of the A/D conversion circuit of FIG.4;

FIGS.6A-6F illustrate the transformation of signal waveforms in the circuit configuration of FIG.5;

FIGS.7A-7E are diagrams of waveforms for illustrating the effects of the embodiment of the present invention (part 1);

FIGS.8A-8C are diagrams of waveforms for illustrating the effects of the embodiment of the present invention (part 2);

FIGS.9A and 9B are further detailed illustrations of an exemplary application of the present invention; and

FIG.10 is a block diagram showing a circuit configuration of a modem as a data transmission apparatus according to another embodiment of the present invention.

## DESCRIPTION OF THE PREFERRED EMBODIMENTS

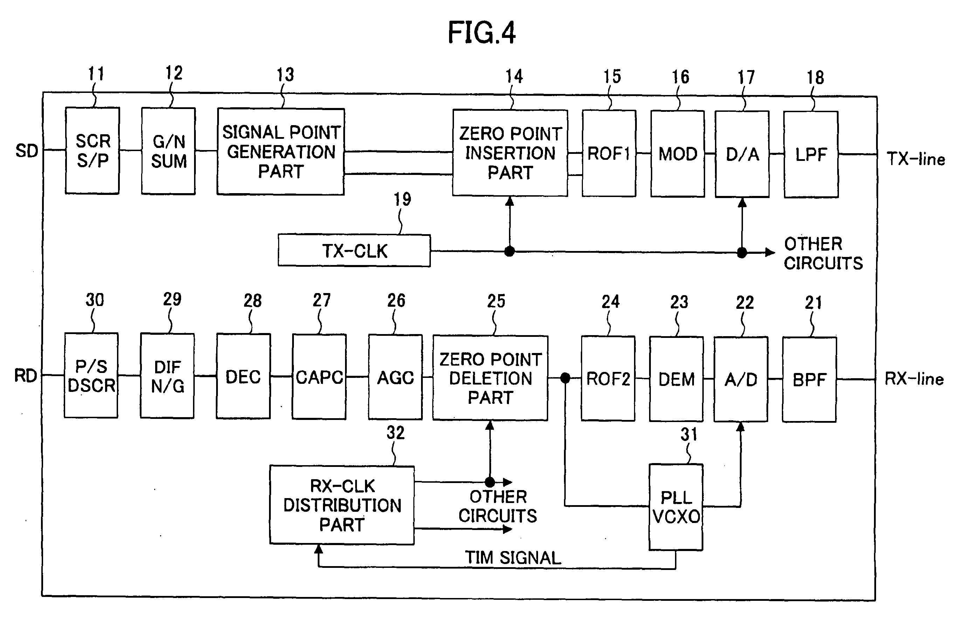

FIG.4 shows an exemplary configuration of the modem implemented at the pole transformer 9-3 or at the terminating portion of the internal wiring 9-7 in the house 9-6 of FIG.1, as a data transmission apparatus according to an embodiment of the present invention. In this drawing, a scrambler (SCR, S/P) 11 performs a scramble process on a transmitted signal (SD), and also converts this signal from a serial signal to a parallel signal, the resulting signal being sent to a vector summation circuit (G/N, SUM) 12.

The vector summation circuit 12 converts the input parallel signal having a grey binary code (G) into a signal with a natural binary code (N), and computes a vector component summation, which is a counterpart process performed by a vector differential circuit (DIF, N/G) 29 for phase detection at the receiving side. Then, the resulting signal is sent to a signal point generator 13.

The signal point generator 13 divides the input transmitted data into multiple portions, each having predetermined number of bits, based on predetermined modulation block units, and generates one signal point for each portion corresponding to the number of bits. Then a zero point signal is inserted into the transmitted signal made up of these signal points by a zero point inserter 14. Then a waveform is shaped by a roll off filter (ROF1) 15 in accordance with the limitations on the available frequency band in the power line carrier communication. Further, the transmitted signal is modulated by a modulation circuit (MOD) 16, and converted from a digital signal to an analog signal by a D/A conversion circuit (D/A) 17. Then, a low frequency signal component covering the frequency band of the power line carrier wave is extracted by a low pass filter (LPF) 18, and this is sent onto a transmission line TX-line.

The transmitted signal sent via the transmission line TX-line is received by a counterpart modem (e.g. the modem implemented at the terminating portion of the internal wiring 9-7 in the house 9-6 as a counterpart of the modem implemented at the pole transformer 9-3 of FIG.1) through a receiving line RX-line and a band pass filter (BPF) 21 extracts only a predetermined frequency band component therefrom. The resulting signal is then converted back to a digital signal by an A/D conversion circuit (A/D) 22.

This digitalized signal is converted into a base band signal by a demodulation circuit (DEM) 23 and the waveform is shaped by a roll off filter (ROF2) 24. Then the output signal is sent to a VCXO (Voltage Controlled Crystal Oscillator) type phase lock loop circuit (PLL-VCXO) 31.

The VCXO type phase lock loop circuit 31 extracts the phases of the zero points in the signal and supplies the phases of these zero points as a sampling timing signal to the A/D conversion circuit (A/D) 22 and a clock (RX-CLK) distribution part 32.

Also, the output signal of the roll off filter (ROF2) 24 of the reception side goes through a zero point deletion part 25 where the zero points in the signal are deleted. Then an automatic gain controller (AGC) 26 controls the signal gain at a predetermined level and an automatic carrier phase controller (CAPC) 27 performs phase adjustment on the signal. Further, a determination circuit (DEC) 28 determines the reception signal and the determination result is output to the vector component differential circuit (DIF, N/G) 29.

The vector differential circuit (DIF, N/G) 29 computes a vector difference for the signal containing the natural binary code sent from the vector summation circuit (G/N, SUM) 12 of the transmission side, which is an inverse process of the computation performed by the vector summation circuit (G/N, SUM) 12. Then the signal is converted back to a signal with a grey binary code (G), and sent to a descrambler (P/S, DSCR) 31. The descrambler 31 converts this parallel grey code signal to a serial signal and performs a descramble process to obtain received data (RD).

Also, on the transmission side, a transmission clock distribution circuit (TX-CLK) 19 distributes a transmission clock signal to the zero point insertion part 14, the D/A converter (D/A) 17, and other transmission circuits. On the reception side, the reception clock (RX-CLK) distribution part 32 extracts a reception clock signal from the VCXO type phase lock loop circuit (PLL-VCXO) 31 and distributes this reception clock signal to the zero point deletion part 25 and other reception circuits.

Note that the reception clock (RX-CLK) distribution part 32 is merely a passage way for the sampling timing signal indicating the phase of the zero points extracted from the VCXO type phase lock loop circuit (PLL-VCXO) 31, and this signal is simply a symbolic timing signal.

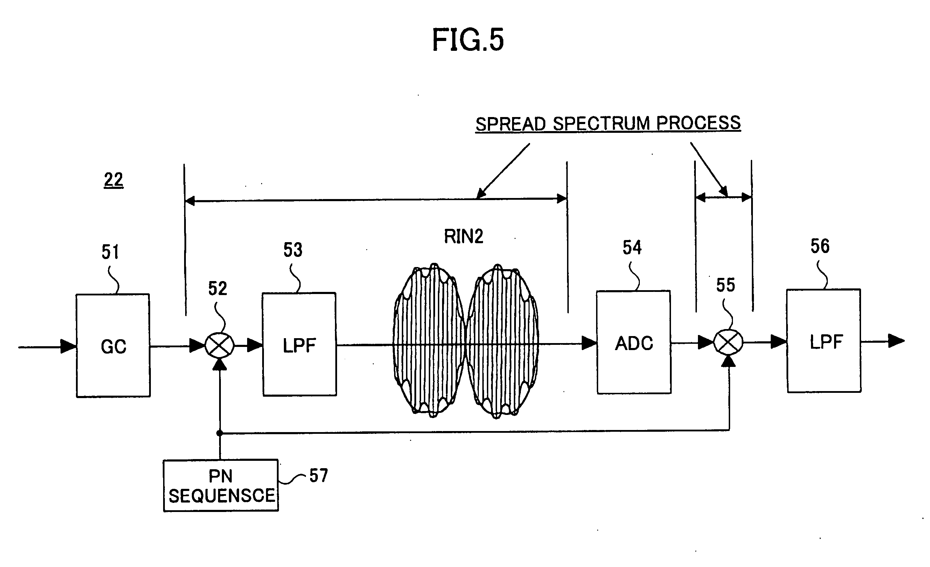

FIG.5 is a block diagram showing an internal circuit configuration of the A/D conversion circuit 22 of the reception side shown in FIG.4. In this circuit diagram, the input signal that has undergone the frequency band limitation process at the band pass filter 21 has a waveform as shown in FIG.2A, for example. Then at a gain control circuit 51, the amplitude of the input signal is attenuated so as to conform to the dynamic range of the A/D converter 54. Then, this signal is multiplied by a predetermined PN (pseudonoise) sequence supplied by a PN sequence generator 57 at a multiplier 52, and a spread spectrum process is performed by high speed sampling.

Herein, the term 'PN sequence' is used as a general term for referring to the spreading codes by which a signal for modulation is multiplied in the spread spectrum process. The spreading codes may be, for example, M sequence codes, Gold sequence codes, Wavelet sequence codes, Hadamard sequence codes, etc.

Also, in order to improve the resolution of the A/D converter 54, a PN sequence with a large number of chips needs to be multiplied. Thus, the spread spectrum process by the multiplier 52 involves high speed sampling.

Next, after excessive high frequency components are removed at a low pass filter 53, the signal is input to the A/D converter 54 where an analog-to-digital conversion is performed. This process also involves high speed sampling so that the resolution of the A/D converter 54 can be improved (however, with a low bit rate).

Then, an inverse spread spectrum process is performed at a multiplier 55 by multiplying the input signal by the same PN sequence supplied from the PN sequence generator 57. The multiplication in this spread spectrum process is performed using multi-chip PN sequences as in the multiplier 52. Thus, the inverse spread spectrum process also involves high speed sampling (however, with a low bit rate).

As a result, a digitalized reception signal is obtained. High frequency components are further removed from this digitalized signal at a low pass filter 56, and the resulting output is supplied to the demodulator 23 shown in FIG.4. By performing a low speed sampling process in the subsequent digital signal processing steps, the desired high bit rate signal can be obtained.

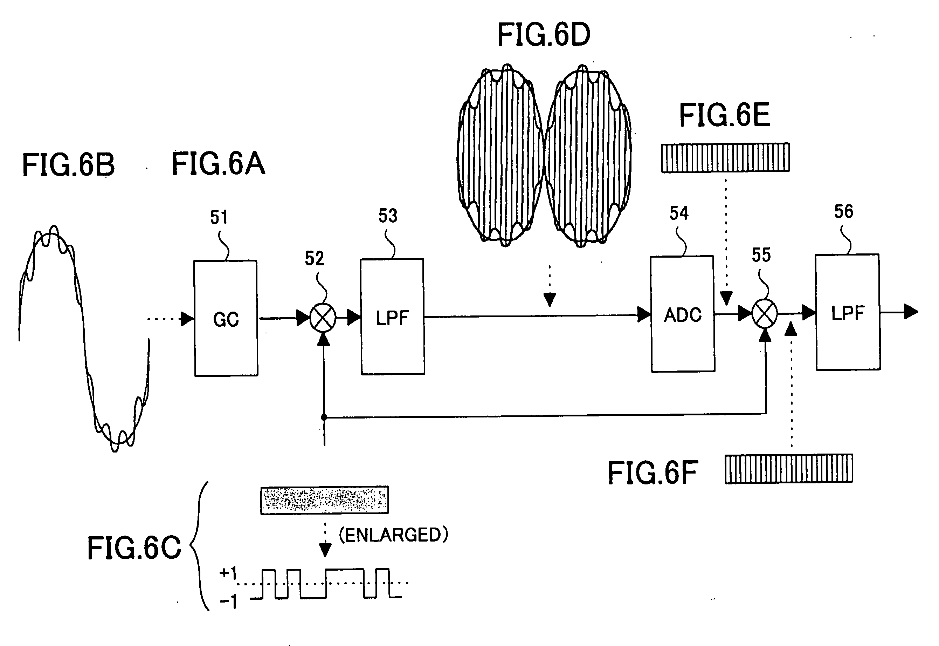

FIGS.6A-6F show the changes in the waveform of the signal at each point in the circuit configuration of FIG. 5. Namely, an analog input signal a (t) made up of a reception signal superimposed on a noise signal as shown in FIG. 6B is multiplied by a PN sequence c(t) shown in FIG.6C at a multiplier 52. The resulting analog signal a(t)*c(t) goes through the low pass filter 53 and is digitally converted at the A/D converter 54 to obtain a digital signal a (t)*c(t)*A/D. Then the PN sequence c (t) is multiplied to obtain a digital signal as follows:

$$a(t)*c(t)*A/D*c(t)$$
$$=a(t)*A/D*c(t)*c(t)$$
$$=a(t)*A/D$$

Thus, the digitalized signal a(t)*A/D corresponding to the input analog signal a(t) can be obtained.

In the following, a calculation method for obtaining a PN sequence number of the PN sequence that is to be used in the multiplication of the input signal at the multipliers 52 and 55 is described. Hereinafter, the 'PN sequence number' refers to the number of chips in each cycle of the PN sequence. In the following let it be assumed that when a dynamic range of 130 (dB) is required in digitally converting an input signal of the A/D conversion circuit 22 of FIG.5 at a predetermined precision level, the number of bits required in detecting the entire range is 22 bits. The PN sequence number required in order to secure bits over 22 is 65,535 as shown in the following table chart 1.

Table Chart 1

| PN sequence number ($N_{PN}$) | Number of bits in ADC | Increased number of bits (n) in ADC | Total number of bits |
|---|---|---|---|
| 31 | 14 | 2.5 | 16.5 |
| 63 | 14 | 3 | 17 |
| 127 | 14 | 3.5 | 17.5 |
| 255 | 14 | 4 | 18 |
| 511 | 14 | 4.5 | 18.5 |
| 1023 | 14 | 5 | 19 |
| 2047 | 14 | 5.5 | 19.5 |
| 4095 | 14 | 6 | 20 |
| 8191 | 14 | 6.5 | 20.5 |
| 16383 | 14 | 7 | 21 |
| 32767 | 14 | 7.5 | 21.5 |
| 65535 | 14 | 8 | 22 |

In the following, an explanation of the underlying principles of the above calculation method is given. First, the S/N ratio from the multiplication of the PN sequence number $N_{PN}$ of the PN sequence, namely the resolution, increases in accordance with the formula (publicly-known) below:

$$S/N=10 \log N_{PN}$$

Also, the increase in the S/N ratio by the multiplication of the PN sequence produces effects the are equivalent to a substantial improvement in the resolution (increase in number of bits) of the A/D converter 54 shown in FIG.5 by a value n in the formula (publicly-known) below:

$$S/N=10 \ \log \ N_{PN}=6.02 \times n+1.76$$
$$n=(10 \ \log \ N_{PN}-1.76)/6.02$$

That is, the final resolution obtained by the multiplication of the PN sequence can be calculated from the formula below:

Number of bits in ADC + increased number of bits (n)= total number of bits

Referring back to the table chart 1, in order to obtain a resolution of 22 bits in detecting reception data from an input signal requiring a dynamic range of 130 dB at a predetermined precision level, the resolution of the A/D converter 54 needs to be increased by 8 bits from the original resolution of 14 bits. Thus, the bottom column in the table chart 1 is used and the multiplication needs to be performed using the PN sequence with the PN sequence number 65,535 at each of the multipliers 52 and 55.

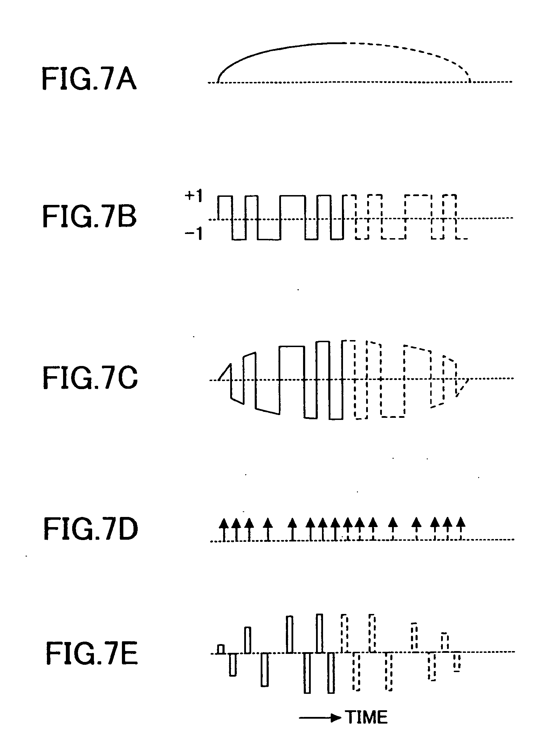

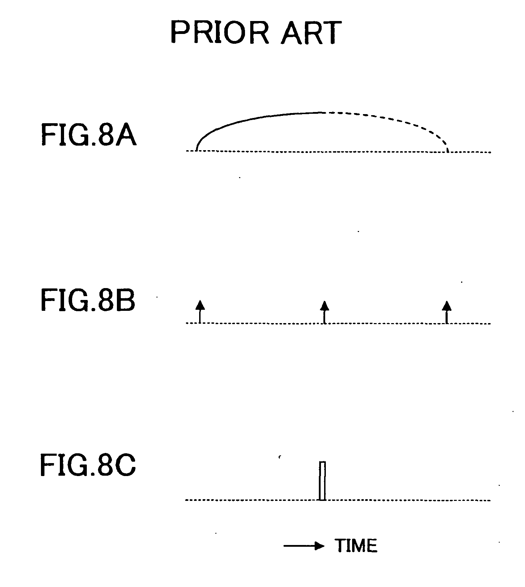

The mechanism for improving the resolution of the A/D converter 54 in the embodiment of the present invention is described in further detail with reference to FIGS.7A-7E and FIGS.8A-8C. FIG.7A corresponds to the input waveform shown in FIG.6B; FIG.7B corresponds to the PN sequence waveform shown in FIG.6C; FIG.7C corresponds to the signal waveform after the PN sequence multiplication process shown in FIG.6D; FIG.7D shows the sampling timing in the A/D converter 54; and FIG.7E corresponds to the signal extracted at the A/D converter 54 as shown in FIG.6E.

On the other hand, FIGS.8A-8C show exemplary signal waveforms in the conventional art where the spread spectrum process using the PN sequence is not implemented. Herein, FIG.8A shows the same original signal as that in FIG.7A; FIG.8B shows the sampling timing of a conventional A/D converter; and FIG.8C shows the waveform extracted at the A/D converter.

As can be discerned from these drawings, in the embodiment of the present invention, the input waveform is multiplied by the PN sequence and the sampling timing of the A/D converter 54 is also increased corresponding to the multiplication result. Herein, it is assumed that the sampling timing of the conventional A/D converter is the same as the bit rate of the PN sequence used in the present embodiment. Further, in this case the PN sequence number of the PN sequence is the number of chips in each cycle of the PN sequence. Thereby, it is assumed that by the multiplication of the PN sequence, the new bit rate will be the product of the bit rate of the original signal by the PN sequence number.

In turn, the sampling timing of the A/D converter, that is, the sampling rate, is also increased by a multiplying number that is equivalent to the PN sequence number, the rate of improvement in the bit rate. As a result, it is possible to substantially improve the resolution of signal extraction by the A/D converter 54. That is, in a case according to the table chart 1, if the sampling rate of the original A/D converter is 1 MHz and a PN sequence number 31 of the PN sequence is multiplied (refer to the top column in the table chart 1), the sampling rate of the A/D converter 54 is also multiplied by 31 to obtain a sampling rate of 31 MHz. As a result, the frequency of the PN sequence used in the multiplication at the multiplier 52, namely, the pitch rate, and the sampling rate of the A/D converter 54 will both be 31 MHz.

Consequently, as shown in FIG.7D, sampling by the A/D converter 54 is performed at a timing identical to the oscillation timing of the original signal that is oscillated in both positive and negative directions as a result of the multiplication using the PN sequence . In this way, a highly precise signal extraction is possible by the A/D converter 54.

In the following, the underlying principles of the above formula are described. First, the formula

$$S/N=10 \ \log \ N_{PN}$$

is based on a basic formula regarding the transmission quantity as follows:

$$S/N=10 \ \log \ (P_S/P_N)$$

In the above formula, $P_N$ and $P_S$ represent the signal power and the noise power, respectively. The underlying principles of this formula are explained, for example, in Decibels-Handling Transmission Levels, Sakai and Suwa, Nikkan Kogyo Shimbun, LTD.

Also, in the following, the reason why the ratio of the signal power to the noise power (S/N) is equal to the PN sequence number $N_{PN}$ is explained. In general, quantized noise, which is the determining factor of the S/N ratio of the A/D converter, is proportional to the sampling frequency of the A/D converter. Thus, for example, by doubling the sampling frequency of the A/D converter, the S/N ratio can be improved by 3 dB. The specific details concerning this matter can be found in, for example, <u>Introduction to A/D Converters</u>, Yoneyama, Ohmsha, Ltd.

By substituting values into the above formula, the following can be obtained:

$$S/N=10 \ log(P_S/(P_N/2))=10 \ log \ 2=3(dB)$$

Accordingly, in the above formula, $P_S/P_N$, as the improvement rate of the S/N ratio, can be replaced by the ratio of the sampling frequencies (sampling rates before and after the multiplication) in the A/D converter. Further, by equalizing the PN sequence number to the ratio of the sampling frequencies (increase rate), which is the improvement rate in the A/D converter 54, the formula

$$S/N=10 \ log \ N_{PN}$$

can be obtained.

Also, the formula $S/N=10 \ log \ N_{PN}=6.02 \times n+1.76$ is based on a basic formula of the S/N ratio concerning quantization:

$$S/N=20log2^n \cdot \sqrt{3}/2=6.02 \times n+1.76$$

The underlying principles of this formula are explained in, for example, <u>PMC Communication Technology</u>, Kaneko, Sangyo Shuppan, Ltd.

Thus, according to the embodiment of the present invention, the resolution of the A/D converter 54 can be substantially improved by performing a spread spectrum process wherein high speed sampling is performed on the input signals in the A/D conversion circuit 22. As a result, a data transmission apparatus that prevents the degradation of reception signal detection performance is realized.

In the following, the advantages of the present embodiment are described in further detail.

As a technique for enabling the use of a general-purpose A/D converter with a dynamic range that does not directly conform to the high amplitude of the input signal, a gain controller has conventionally been implemented before the general-purpose A/D converter so as to attenuate the signal amplitude. However, in this case, the resolution of the general-purpose A/D converter is only 14 bits, this being obtained by the formula below:

$$Resolution=FSR/2^{14}=FSR/16384$$

Herein, FRS stands for 'full scale range'.

On the other hand, in the embodiment of the present invention, multiplication by the PN sequence having the PN sequence number 65,535 is performed, thereby realizing a performance substantially equivalent to the performance of a conventional A/D converter with a resolution of 22 bits using the same general-purpose A/D converter with the resolution of 14 bits. The resolution of the A/D converter in this case is obtained from the following formula:

$$Resolution=FSR/2^{22}=FSR/4194404$$

Thus, a resolution that is 256 times (=4,194,404/16,384) the resolution in the conventional technique can be realized.

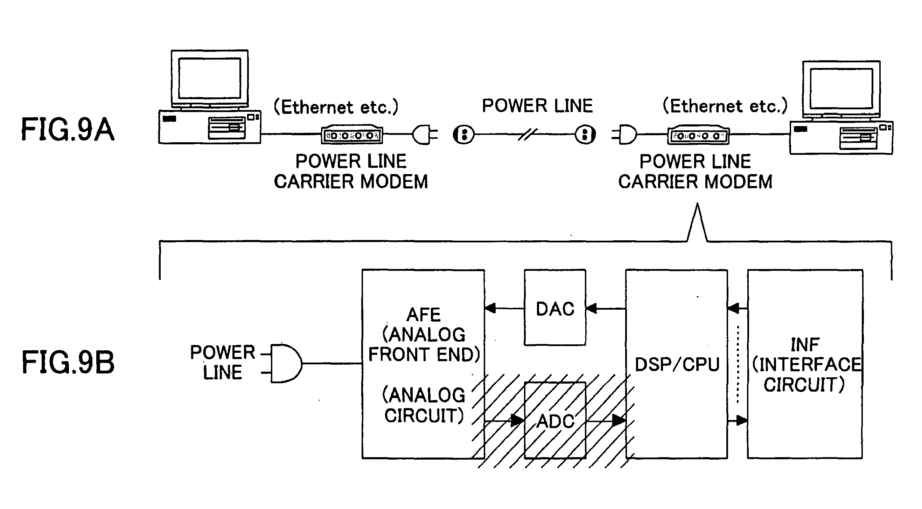

FIGS.9A and 9B illustrate a more generalized system in which the embodiment of the present invention can be implemented. The modem functioning as the data transmission apparatus of the present embodiment corresponds to a power line carrier modem, which is the terminal portion of the power line carrier communication system realized by power lines as shown in FIG.9A.

Further, the power line carrier modem according to this embodiment is characterized by an A/D conversion circuit portion indicated by hatched lines in FIG.9B. This A/D conversion circuit may have the configuration of the A/D conversion circuit 22 shown in FIG.5 wherein a general-purpose A/D converter 54 is used to perform high speed sampling using a PN sequence in a spread spectrum process. In this way, the resolution in the A/D conversion can be effectively improved, and as a result, a data transmission apparatus that is capable of accurately detecting transmission data can be realized in a power line carrier communication system, which is generally considered to have a high noise ratio.

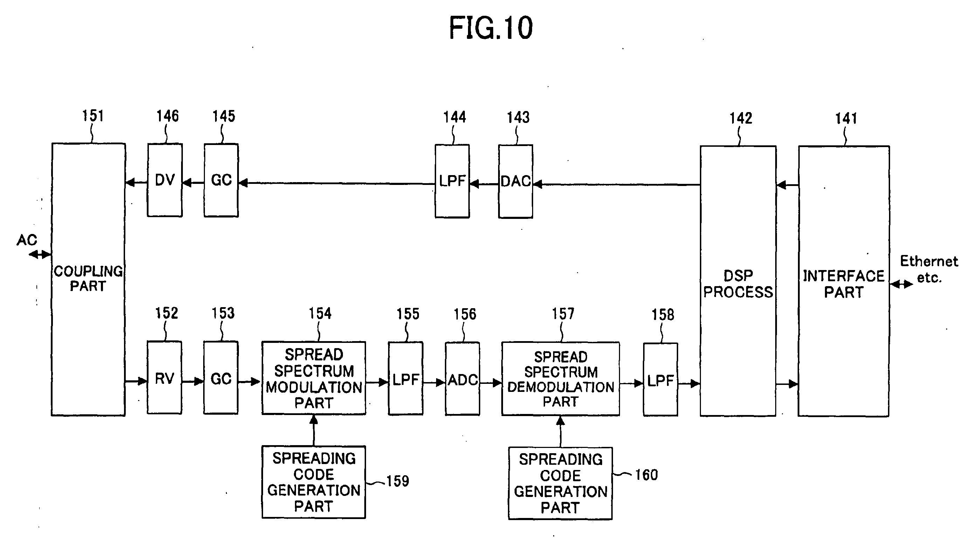

FIG.10 is a block diagram showing a circuit configuration of a data transmission apparatus according to another embodiment of the present invention. This data transmission apparatus may correspond to the modem shown in FIG. 9B. In FIG.10, the input signal received via the power line is supplied to a spread spectrum modulation part 154 via a coupling part 151 that extracts the signal carried by the power carrier line, a receiving part 152 that extracts the desired signal components, and a gain controller 153 that controls the amplitude of the signal. At the spread spectrum modulation part 154, the input signal is multiplied by the PN sequence to perform the spread spectrum modulation. A spreading code generation part 159 generates the PN sequence and supplies this to the spread spectrum modulation part 154.

Next, the above modulated signal goes through a low pass filter 155 where unnecessary high frequency components are removed, after which the signal is converted into a digital signal at an A/D converter 156. Then, at a spread spectrum demodulation part 157, the same PN sequence is multiplied to perform despreading. A spreading code generation part 160 generates the PN sequence and supplies this to the spread spectrum demodulation part 157.

Subsequently, unnecessary high frequency components are removed at a low pass filter 158, and a predetermined signal process is performed on the digital signal at a digital signal processing part 142 so as to regenerate the signal into the original signal. Then, interface processing for other networks is performed at an interface part 141 after which the regenerated signal is output.

On the other hand, signals received via other networks undergo a predetermined interface process at the interface part 141, after which a predetermined process is performed at the digital signal processing part 142. Then, the digital signal is converted into an analog signal at a D/A converter 143. Next, this analog signal passes through a low pass filter 144 where unnecessary high frequency components are removed, after which the amplitude of this signal is adjusted at a gain controller 145. Then, the amplitude of the signal is increased at a drive part 146 and the resulting signal is sent to the coupling part 151 for transmission via the power line.

In the circuit configuration of FIG.10, the gain controller 153, the spread modulation part 154, the low pass filter 155, A/D converter 156, the spread demodulation part 157, the low pass filter 158, and the spreading code generation parts 159 and 160 correspond to the gain controller 51, the multiplier 52, the low pass filter 53, the A/D converter 54, the multiplier 55, the low pass filter 56 and the PN sequence generation part 57, respectively, and identical processes are performed in each of the corresponding parts.

It should be noted that the present invention is not limited to the above mentioned embodiments and various modifications can be made so long as the basic principles of the present invention are respected.

In the present invention, by incorporating a spread spectrum process in the analog-to-digital conversion process in the manner described above, the performance of the analog-to-digital conversion can be substantially improved. Thereby, transmission data contained in an input signal can be accurately regenerated as a digital signal even with a general-purpose A/D converter having a relatively narrow dynamic range.

This patent application is based on and claims the benefit of the earlier filing date of Japanese patent application No. 2002-243578 filed August 23, 2002.

## Claims

1. A data transmission apparatus comprising a transmission side and a reception side, **characterized in that** the reception side includes:

   a spread spectrum processing part (52) that performs a spread spectrum process on an input signal;
   an analog-to-digital conversion part (54) that performs an analog-to-digital conversion process on a signal that has undergone said spread spectrum process; and
   an inverse spread spectrum processing part (55) that performs an inverse spread spectrum process of said spread spectrum process on a signal that has undergone said analog-to-digital conversion process.

2. The data transmission apparatus as claimed in Claim 1, wherein said spread spectrum process is performed using a predetermined PN sequence (57).

3. The data transmission apparatus as claimed in Claim 2, wherein a PN sequence number of said PN sequence is set to a value that increases a bit number for said analog-to-digital conversion process to a required bit number for detecting transmission data contained in the input signal with a predetermined precision.

4. The data transmission apparatus as claimed in Claim 1, further comprising:

> a gain controlling part (51) that performs a signal gain controlling process on an input signal, wherein
> said spread spectrum processing part (52) performs a spread spectrum process on a signal that has undergone
> said signal gain controlling process.

5. A power line carrier communication system comprising:

> a power line functioning as a data transmission path for transmitting data; and
> a data transmission apparatus as claimed in claim 1 that terminates said power line

6. A data transmission method, for performing data transmission in a data transmission apparatus comprising a transmission side and a reception side, comprising, on the reception side:

> a spread spectrum processing step (52) of performing a spread spectrum process on an input signal;
> an analog-to-digital conversion step (54) of performing an analog-to-digital conversion process on a signal that
> has undergone said spread spectrum process; and
> an inverse spread spectrum processing step (55) of performing an inverse spread spectrum process of said
> spread spectrum process on a signal that has undergone said analog-to-digital conversion process.

7. The data transmission method as claimed in Claim 6, wherein said spread spectrum process is performed using a predetermined PN sequence (57) in said spread spectrum processing step.

8. The data transmission method as claimed in Claim 7, wherein a PN sequence number of said PN sequence is set to a value that increases a bit number for said analog-to-digital conversion process to a required bit number for detecting transmission data contained in the input signal with a predetermined precision.

9. The data transmission method as claimed in Claim 6, further comprising:

> a gain controlling step (51) of performing a signal gain controlling process on an input signal; wherein
> said spread spectrum process of said spread spectrum processing step (52) is performed on a signal that has
> undergone said signal gain controlling process.

**Patentansprüche**

1. Datenübertragungsvorrichtung, umfassend eine Sendeseite und eine Empfangsseite, **dadurch gekennzeichnet, dass** die Empfangsseite einschließt:

> ein Spreizspektrum-Verarbeitungsteil (52), das einen Spreizspektrumprozess bezüglich eines Eingangssignals
> durchführt;
> ein Analog-zu-Digital-Konversionsteil (54), das einen Analog-zu-Digital-Konversionsprozess bezüglich eines
> Signals durchführt, das den Spreizspektrumprozess durchlaufen hat; und
> ein Inversspreizspektrum-Verarbeitungsteil (55), das einen inversen Spreizspektrumprozess des Spreizspektrumprozesses bezüglich eines Signals durchführt, das den Analog-zu-Digital-Konversionsprozess durchlaufen
> hat.

2. Datenübertragungsvorrichtung nach Anspruch 1, wobei der Spreizspektrumprozess unter Verwendung einer vorbestimmten PN-Sequenz (57) durchgeführt wird.

3. Datenübertragungsvorrichtung nach Anspruch 2, wobei eine PN-Sequenzanzahl der PN-Sequenz auf einen Wert eingestellt ist, der eine Bitanzahl für den Analog-zu-Digital-Konversionsprozess auf eine erforderliche Bitanzahl zum Erfassen von Übertragungsdaten, die in dem Eingangssignal enthalten sind, mit einer vorbestimmten Präzision erhöht.

4. Datenübertragungsvorrichtung nach Anspruch 1, weiter umfassend:

ein Verstärkungssteuerteil (51), das einen Signalverstärkungs-Steuerprozess bezüglich eines Eingangssignals durchführt, wobei

das Spreizspektrum-Verarbeitungsteil (52) einen Spreizspektrumprozess bezüglich eines Eingangssignals durchführt, das den Signalverstärkungs-Steuerprozess durchlaufen hat.

5. Netzleitungsträger-Kommunikationssystem, umfassend:

eine Netzleitung, die als ein Datenübertragungspfad zum Übertragen von Daten arbeitet; und
eine Datenübertragungsvorrichtung nach Anspruch 1, die die Netzleitung abschließt.

6. Datenübertragungsverfahren zum Durchführen einer Datenübertragung in einer Datenübertragungsvorrichtung, die eine Sendeseite und eine Empfangsseite umfasst, umfassend, auf der Empfangsseite:

einen Spreizspektrum-Verarbeitungsschritt (52) zum Durchführen eines Spreizspektrumprozesses bezüglich eines Eingangssignals;
einen Analog-zu-Digital-Konversionsschritt (54) zum Durchführen eines Analog-zu-Digital-Konversionsprozesses bezüglich eines Signals, das den Spreizspektrumprozess durchlaufen hat; und
einen Inversionsspreizspektrum-Verarbeitungsschritt (55) zum Durchführen eines inversen Spreizspektrumprozesses des Spreizspektrumprozesses bezüglich eines Signals, das den Analog-zu-Digital-Konversionsprozess durchlaufen hat.

7. Datenübertragungsverfahren nach Anspruch 6, wobei der Spreizspektrumprozess unter Verwendung einer vorbestimmten PN-Sequenz (57) bei dem Spreizspektrum-Verarbeitungsschritt durchgeführt wird.

8. Datenübertragungsverfahren nach Anspruch 7, wobei eine PN-Sequenzanzahl der PN-Sequenz auf einen Wert eingestellt wird, der eine Bitanzahl für den Analog-zu-Digital-Konversionsprozess auf eine erforderliche Bitanzahl zum Erfassen von Übertragungsdaten, die in dem Eingangssignal enthalten sind, mit einer vorbestimmten Präzision erhöht.

9. Datenübertragungsverfahren nach Anspruch 6, weiter umfassend:

einen Verstärkungssteuerschritt (51) zum Durchführen eines Signalverstärkungs-Steuerprozesses bezüglich eines Eingangssignals; wobei
der Spreizspektrumprozess des Spreizspektrum-Verarbeitungsschritts (52) bezüglich eines Signals durchgeführt wird, das den Signalverstärkungs-Steuerprozess durchlaufen hat.

**Revendications**

1. Dispositif de transmission de données comprenant un côté émission et un côté réception, **caractérisé en ce que** le côté de réception comprend :

une partie de traitement d'étalement de spectre (52) qui exécute un traitement d'étalement de spectre sur un signal d'entrée,
une partie de conversion d'analogique en numérique (54) qui exécute un traitement de conversion d'analogique en numérique sur un signal qui a subi ledit traitement d'étalement de spectre, et
une partie de traitement d'étalement de spectre inverse (55) qui exécute un traitement d'étalement de spectre inverse dudit traitement d'étalement de spectre sur un signal qui a subi ledit traitement de conversion d'analogie en numérique.

2. Dispositif de transmission de données selon la revendication 1, dans lequel ledit traitement d'étalement de spectre est exécuté en utilisant une séquence de pseudo-bruit PN prédéterminée (57).

3. Dispositif de transmission de données selon la revendication 2, dans lequel un numéro de séquence de pseudo-bruit PN de ladite séquence de pseudo-bruit PN est établi a une valeur qui augmente un nombre de bits pour ledit traitement de conversion d'analogique en numérique a un nombre de bits requis pour la détection de données de transmission contenues dans le signal d'entrée avec une précision prédéterminée.

**4.** Dispositif de transmission de données selon la revendication 1, comprenant en outre :

une partie de commande de gain (51) qui exécute un traitement de commande de gain sur un signal d'entrée, où ladite partie de traitement d'étalement de spectre (52) exécute un traitement d'étalement de spectre sur un signal qui a subi ledit traitement de commande de gain de signal.

**5.** Système de communications à courants porteurs sur ligne électrique, comprenant :

une ligne électrique fonctionnant en tant que trajet de transmission de données pour transmettre des données, et un dispositif de transmission de données selon la revendication 1 qui termine ladite ligne électrique.

**6.** Procédé de transmission de données, destiné à effectuer une transmission de données dans un dispositif de transmission de données comprenant un côté d'émission et un côté de réception, comprenant, du côté de réception :

une étape de traitement d'étalement de spectre (52) consistant à exécuter un traitement d'étalement de spectre sur un signal d'entrée,
une étape de conversion d'analogique en numérique (54) consistant à exécuter un traitement de conversion d'analogique en numérique sur un signal qui a subi ledit traitement d'étalement de spectre, et
une étape de traitement d'étalement de spectre inverse (55) consistant à exécuter un traitement d'étalement de spectre inverse dudit traitement d'étalement de spectre sur un signal qui a subi ledit traitement de conversion d'analogique en numérique.

**7.** Procédé de transmission de données selon la revendication 6, dans lequel ledit traitement d'étalement de spectre est exécuté en utilisant une séquence de pseudo-bruit PN prédéterminée (57) dans ladite étape de traitement d'étalement de spectre.

**8.** Procédé de transmission de données selon la revendication 7, dans lequel un numéro de séquence de pseudo-bruit PN de ladite séquence de pseudo-bruit PN est établie à une valeur qui augmente un nombre de bits pour ledit traitement de conversion d'analogique en numérique à un nombre de bits requis pour la détection de données de transmission contenues dans le signal d'entrée avec une précision prédéterminée.

**9.** Procédé de transmission de données selon la revendication 6, comprenant en outre :

une étape de commande de gain (51) consistant à exécuter un traitement de commande de gain de signal sur un signal d'entrée, où
le traitement d'étalement de spectre de ladite étape de traitement d'étalement de spectre (52) est exécuté sur un signal qui a subi ledit traitement de commande de gain de signal.

FIG.1

EP 1 392 002 B1

# FIG.2A

# FIG.2B

EP 1 392 002 B1

RS

RN

RIN
(dB)

ADC → DSP/CPU

# FIG.3  PRIOR ART

# FIG.4

EP 1 392 002 B1

# FIG.5

SPREAD SPECTRUM PROCESS

22

51 GC

52

53 LPF

RIN2

54 ADC

55

56 LPF

PN SEQUENSCE 57

EP 1 392 002 B1

16

FIG.6D

FIG.6E

FIG.6B          FIG.6A

51              53

52

GC      ⊗      LPF

+1 ___ ⊓ ⊓ __ ⊓ ⊓ ⊓ __ ⊓ ⊓ __
−1

FIG.6C { (ENLARGED)

54      55      56

ADC     ⊗      LPF

FIG.6F

FIG.7A

FIG.7B

FIG.7C

FIG.7D

FIG.7E

⟶ TIME

# PRIOR ART

FIG.8A

FIG.8B

FIG.8C

→ TIME

## FIG.9A

POWER LINE
(Ethernet etc.)   POWER LINE   (Ethernet etc.)

POWER LINE
CARRIER MODEM        POWER LINE
CARRIER MODEM

## FIG.9B

POWER
LINE

AFE
(ANALOG
FRONT END)

(ANALOG
CIRCUIT)

DAC

ADC

DSP/CPU

INF
(INTERFACE
CIRCUIT)

EP 1 392 002 B1

# FIG.10

COUPLING PART 151

DV 146

GC 145

LPF 144

DAC 143

DSP PROCESS 142

INTERFACE PART 141

AC

Ethernet etc.

RV 152

GC 153

SPREAD SPECTRUM MODULATION PART 154

LPF 155

ADC 156

SPREAD SPECTRUM DEMODULATION PART 157

LPF 158

SPREADING CODE GENERATION PART 159

SPREADING CODE GENERATION PART 160

EP 1 392 002 B1

**EP 1 392 002 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0496717 A
- JP 2002243578 A